# EUROPÄISCHE PATENTANMELDUNG

(11) **EP 2 863 454 A1**
(43) Veröffentlichungstag der Anmeldung: **22.04.2015**
(21) Anmeldenummer: 13188899.2
(22) Anmeldetag: 16.10.2013
(51) Int. Cl.: H01M 2/34, H01C 7/12, H01M 10/39, H01M 10/42, H02J 7/00, H01M 2/06, H01M 2/08

(54) **Elektrochemischer Energiespeicher mit spannungsabhängiger Zwischenschicht**

(71) Anmelder: Siemens Aktiengesellschaft, 80333 München (DE)
(72) Erfinder: Kühne, Michael, Dr., 90762 Fürth (DE); Soller, Thomas, Dr., 94405 Landau/Isar (DE)

(57) **Zusammenfassung**

Die Erfindung betrifft einen Elektrochemischen Energiespeicher (1) mit einer Anode (11), die mit einem Anodenraum (21) elektrisch verbunden ist, und einer Kathode (12), die mit einem Kathodenraum (22) elektrisch verbunden ist, und einen Ionen leitenden Separator (13), welcher den Anodenraum (21) von dem Kathodenraum (22) elektrisch isolierend trennt, wobei zwischen Anode (11) und Kathode (12) eine spannungsabhängige Zwischenschicht (15) angeordnet ist, die mit der Anode (11) und der Kathode (12) direkt oder auch indirekt elektrisch kontaktiert ist, und deren elektrischer Widerstand sich entsprechend einer veränderten elektrischen Spannungsdifferenz zwischen Anode (11) und Kathode (12) derart ändert, dass ein elektrischer Strom über die Zwischenschicht (15) zwischen Anode (11) und Kathode (12) fließen kann.

## Beschreibung

Die vorliegende Erfindung betrifft einen elektrochemischen Energiespeicher mit einer Anode, die mit einem Anodenraum elektrisch verbunden ist und einer Kathode, die mit einem Kathodenraum elektrisch verbunden ist, und einen Ionen leitenden Separator, welcher den Anodenraum von dem Kathodenraum elektrisch isolierend trennt. Weiter betrifft die vorliegende Erfindung ein elektrochemisches Speichermodul, welches wenigstens zwei derartige elektrochemische Energiespeicher in elektrischer serieller Verschaltung miteinander aufweist.

Die vorliegende Erfindung betrifft elektrochemische Energiespeicher, durch welche elektrische Energie durch eine elektrochemische Umsetzung in chemischer Form zwischengespeichert werden kann, so dass die Energie zu einem späteren Zeitpunkt in elektrischer Form erneut zur Verfügung gestellt werden kann. Insbesondere betrifft die vorliegende Erfindung Hochtemperatur-Energiespeicher, welche in einem Temperaturbereich zwischen 100 °C und 500 °C als Betriebstemperatur arbeiten. Ganz besonders sind darunter elektrochemische Energiespeicher zu rechnen, die auf der Technologie der Natrium-Nickel-Chlorid-Zellen oder Natrium-Schwefel-Zellen basieren.

Um für Speichermodule, die auf diesen Technologien basieren, technisch relevante Spannungswerte erhalten zu können, werden in der Regel eine Mehrzahl an elektrochemischen Energiespeichern in Reihe geschaltet und zu Strängen zusammengefasst. Stränge sind damit im Sinne eines Speichermoduls bzw. eines Teils davon zu verstehen. Bei einer Reihenschaltung einzelner elektrochemischer Energiespeicher ergeben sich aufgrund der Streubreite der Speicherkapazitäten jedoch Einschränkungen für das Gesamtsystem. So bestimmt nämlich bspw. der Energiespeicher mit der geringsten Kapazität in der Reihenschaltung die maximal nutzbare Kapazität des gesamten Strangs. Eine vergleichbare Einschränkung ergibt sich ebenfalls für die unterschiedlichen Ladezustände der in Reihe geschalteten Energiespeicher. Hier wird nämlich etwa beim Aufladen der in Reihe geschalteten Energiespeicher dann der Zustand der Vollladung erreicht, wenn der erste Energiespeicher die Vollladung erreicht hat. Dies ist in der Regel derjenige Energiespeicher, welcher bereits die höchste Ladung aufgewiesen hat. Ebenso wird derjenige Energiespeicher in dem Strang mit der geringsten Ladung als erstes bei Entladung der in Reihe geschalteten Energiespeicher entladen sein und bestimmt damit auch den Zeitpunkt der Entladung des gesamten Stranges.

In solchen Speichermodulen sind die Kapazitäten wie auch die Ladezustände stets gewissen Streuungen unterworfen. Diese resultieren bspw. aus unterschiedlichen fertigungstechnischen Einflüssen, da etwa das im Anodenraum befindliche Anodenmaterial bzw. das im Kathodenraum befindliche Kathodenmaterial stets nicht vollständig zur verfügbaren Kapazität beitragen kann. Ebenso sind Einflüsse durch die Korngröße der elektrochemischen Materialien auf die Kapazität bekannt, sowie eine variierende elektrische Leitfähigkeit zwischen einzelnen Inseln von aktiven Massen (Perkolation). Da eine elektrochemische Umsetzung nur in solchen aktiven Bereichen des Energiespeichers stattfinden kann, die über eine ausreichende elektrische Verbindung zu einem Stromsammler des elektrochemischen Energiespeichers verfügen, erfolgt die elektrochemische Umsetzung nicht in allen Bereichen vergleichbar. Ebenso sind Einflüsse auf die Kapazitäten bzw. Ladungszustände aufgrund von betriebsbedingten Veränderungen des Energiespeichers bekannt, welche etwa auf Alterungs- und Degradationseffekten (z.B. Mikrorisse in dem Separator) beruhen.

So ist es etwa bekannt, dass durch längeren Betrieb eines Energiespeichers thermische Spannungen auftreten, welche ein Wachsen von Mikrorissen in dem Ionen leitenden Separator zur Folge haben können. Im Falle eines Energiespeichers, der auf der Grundlage einer Natrium-Nickel-Chlorid-Zelle basiert, ist dieser Separator ein keramischer Separator, welcher Na-β-Al₂O₃ bzw. Na-β"-Al₂O₃ aufweist. Bei Auftreten von Mikrorissen in diesem keramischen Separator kann beispielsweise bei Betriebstemperaturen elementares Natrium aus dem Anodenraum direkt mit dem Kathodenmaterial (Schmelzelektrolyt) im Kathodenraum unter Bildung von elementarem Aluminium und Kochsalz reagieren. Infolge dieser Reaktion könnte der Widerstand des Ionen leitenden Separators geringer werden, wodurch eine kontinuierliche Selbstentladung des Energiespeichers die Folge wäre. Weist beispielsweise ein solcher Ionen leitender Separator typischerweise einen elektrischen Widerstand von mehreren MΩ auf, könnte bei einer schadensbedingten Absenkung des elektronischen Widerstandes beispielsweise auf 10kΩ, bei einer Zellenspannung von 2,5V ein kontinuierlicher Selbstentladestrom von 0,25mA fließen.

Bei Vorliegen einer elektrischen Reihenschaltung einzelner elektrochemischer Energiespeicher würde somit der Energiespeicher mit der geringsten Kapazität, bzw. dem geringsten Ladezustand, den Zeitpunkt vollständiger Entladung als erster erreichen. Würde zu diesem Zeitpunkt der Energiespeicher weiterhin mit einem Entladestrom in gleicher Richtung beaufschlagt, könnte sich die Polarität des bereits entladenen Energiespeichers umkehren, was in der Regel irreversible Schädigungen bis hin zum schadensbedingten Ausfall des Energiespeichers zur Folge hätte.

Würde umgekehrt ein elektrochemisches Speichermodul mit in Serie geschalteten elektrochemischen Energiespeichern über den Zeitpunkt hinaus weiter geladen, zu welchem der erste Energiespeicher den Zustand der vollständigen Ladung erreicht hat, würde die Ladespannung in dem bereits geladenen Energiespeicher in der Regel auf unzulässig hohe Werte ansteigen, wodurch wiederum irreversible chemische Reaktionen die Funktionskomponenten des Energiespeichers beeinträchtigen könnten bzw. den Energiespeicher soweit schädigen, dass dieser ausfällt.

Sind einzelne elektrochemische Energiespeicher einer derartigen Reihenschaltung einer starken Streuung der Kapazitäten bzw. der Ladungszustände unterworfen, erweist es sich als sehr schwierig, die Unterschiede während des Betriebs des Speichermoduls auszugleichen. Folglich besteht sowohl beim Entladen als auch beim Laden eines in Reihe geschalteten Strangs an Energiespeichern die Gefahr einer irreversiblen Schädigung bzw. eines Ausfalls einiger Energiespeicher.

Um diesen Nachteilen entgegenzuwirken, können einzelne Energiespeicher vor deren Verschaltung in einem Speichermodul etwa aussortiert werden, soweit diese nicht innerhalb eines sehr eng definierten Toleranzbandes an Kapazitäten liegen. Dieser Ansatz ist jedoch mit aufwendigen Tests und Versuchsreihen verbunden. Weitere Lösungsansätze beschränken sich bspw. auch auf die Nutzung lediglich eines Teils der zur Verfügung stehenden Kapazität einzelner Energiespeicher, so dass etwa nur 80% der vollständig verfügbaren Kapazität eines solchen Energiespeichers genutzt werden. Dieser Ansatz verhindert jedoch eine effiziente Nutzung des Energiespeichersystems. Ebenso ist es denkbar, einzelne Betriebsparameter, insbesondere den Lade- und/oder Entladestrom, mit welchem ein in Reihe geschalteter Strang beaufschlagt wird, in Abhängigkeit von einem erreichten Ladezustand des gesamten Stranges zu begrenzen. Auch dieser Ansatz erlaubt wiederum nicht, die gesamte Kapazität einzelner Energiespeicher in den Strang zu nutzen. Um Energiespeicher vor einer schädlichen Überladung zu schützen, können bspw. auch elektrisch verschaltete Dioden vorgesehen werden, die bei Überschreiten einer kritischen Schwellenspannung einzelne Energiespeicher überbrücken, um so eine Überbeaufschlagung des Energiespeichers mit elektrischem Strom zu verhindern.

Entsprechend diesen technischen Ansätzen zur Vermeidung von Einschränkungen des Ladezustands bzw. der Speicherkapazitäten einzelner Energiespeicher in einer Reihenschaltung wird weithin in Kauf genommen, dass sich der Ladezustand einzelner Energiespeicher im Laufe des Betriebs einer solchen Reihenschaltung zunehmend verschiebt und sich damit die verfügbare Speicherkapazität vermindert. Diese Nachteile werden typischerweise erst bei Wartung des Speichermoduls behoben, indem etwa einzelne Energiespeicher vorzeitig ausgetauscht werden.

Folglich stellt es sich als technische Aufgabe dar, diese aus dem Stand der Technik bekannten Nachteile, insbesondere beim Laden eines Speichermoduls zu vermeiden. Besonders soll ein elektrochemischer Energiespeicher vorgeschlagen werden, der erlaubt, eine effiziente und kostengünstige Anpassung des Ladezustands einzelner elektrochemischer Energiespeicher in einem Speichermodul derart vorzunehmen, dass die Streuung von verschiedenen Ladezuständen bei Vollladung vermindert ist. Eine solche Anpassung der Ladezustände soll zudem bevorzugt ohne elektronischen Mehraufwand, d.h. ohne weiteren steuerungstechnischen Aufwand erreichbar sein. Die Angleichung verschiedener Ladezustände in einem Speichermodul soll hier weitgehend automatisch, also ohne aktiven Einfluss des Benutzers erfolgen können. Vorzugsweise soll diese Angleichung potenzialgesteuert erfolgen. Bevorzugt soll die Angleichung der einzelnen Ladezustände auch stetig während eines Ladevorganges an in Reihe geschalteten Energiespeichern erfolgen. Externe Regelkreise bzw. elektronische Sicherungsschaltungen sollen hierbei eingespart werden.

Diese der Erfindung zugrundeliegenden Aufgaben werden durch einen elektrochemischen Energiespeicher gemäß Anspruch 1 sowie durch ein elektrochemisches Speichermodul gemäß Anspruch 15 gelöst.

Insbesondere werden diese der Erfindung zugrundeliegenden Aufgaben gelöst durch einen elektrochemischen Energiespeicher mit einer Anode, die mit einem Anodenraum elektrisch verbunden ist, und einer Kathode, die mit einem Kathodenraum elektrisch verbunden ist, und einem Ionen leitenden Separator, welcher den Anodenraum von dem Kathodenraum elektrisch isolierend trennt, wobei zwischen Anode und Kathode eine spannungsabhängige Zwischenschicht angeordnet ist, die mit der Anode und der Kathode direkt oder auch indirekt elektrisch kontaktiert ist, und deren elektrischer Widerstand sich entsprechend einer veränderten elektrischen Spannungsdifferenz zwischen Anode und Kathode derart ändert, dass ein elektrischer Strom über die Zwischenschicht zwischen Anode und Kathode fließen kann.

Weiterhin werden die der Erfindung zugrundeliegenden Aufgaben gelöst durch ein elektrochemisches Speichermodul, welches wenigstens zwei vorab beschriebene wie auch nachfolgend beschriebene Energiespeicher aufweist, die miteinander elektrisch in Serie verschaltet sind.

Vorliegend sollen Anode und Kathode jeweils die elektrisch leitenden Bereiche des elektrochemischen Energiespeichers umfassen, welche auch zum Spannungsabgriff kontaktiert werden können. Anode und Kathode können zudem noch weitere Bereiche des Anodenraums und Kathodenraums umfassen, welche nicht durch den Ionen leitenden Separator getrennt sind. Der Anodenraum wie der Kathodenraum zeichnen sich dadurch aus, dass sie elektrochemisch aktive Bereiche umfassen, also Materialien umfassen, welche infolge der elektrochemischen Reaktionen stofflichen Veränderungen unterworfen sind. So umfasst der Anodenraum ein Anodenmaterial, welches elektrochemisch umgesetzt wird, der Kathodenraum ein Kathodenmaterial, welches ebenfalls bei Laden und Entladen des Energiespeichers elektrochemisch umgesetzt wird.

Besonders bevorzugt ist der elektrochemische Energiespeicher auf der Technologie der Natrium-Nickel-Chlorid-Zellen basierend und umfasst somit als Anodenmaterial Natrium, sowie als Kathodenmaterial eine Mischung aus Nickel, Nickelchlorid, Kochsalz und anderen Zusatzstoffen, die bei Betriebstemperatur einen flüssigen Elektrolyten (Schmelzelektrolyten) ausbilden.

Der Ionen leitende Separator ist vorliegend bevorzugt als Festkörperelektrolyt ausgebildet, welcher spezifisch Ionen leitend ist. Eine solche spezifische Ionenleitfähigkeit stellt sich vor allem dann ein, wenn der Festkörperelektrolyt auf eine vorbestimmte Betriebstemperatur, ganz besonders bevorzugt zwischen 100 °C und 500 °C, erwärmt wird. Ist der elektrochemische Energiespeicher auf der Technologie der Natrium-Nickel-Chlorid-Zellen basierend, ist der Ionen leitende Elektrolyt als dotierter, keramischer Separator (z.B. Na-β-Al₂O₃ bzw. Na-β"-Al₂O₃) ausgebildet, der bei den Betriebstemperaturen für Natrium-Ionen spezifisch Ionen leitend ist.

Das Material der spannungsabhängigen Zwischenschicht wird typischerweise als Varistor-Material bezeichnet. Bei Abwesenheit einer Spannungsdifferenz zwischen Anode und Kathode weist die Zwischenschicht typischerweise einen hohen ohmschen Widerstand auf, welcher verhindert, dass zwischen Anode und Kathode ein für den Betrieb des Energiespeichers wesentlicher elektrischer Strom (Entladestrom, Leckstrom) fließt. Das Leitungsverhalten ändert sich jedoch zunehmend mit ansteigender Spannungsdifferenz (d.h. mit dem Betrag dieser Spannungsdifferenz) und lässt die Zwischenschicht zunehmend leitfähig werden. Bei Erreichen einer vorbestimmten Schwellenspannung (Durchbruchschwellenspannung) nimmt dann die Zwischenschicht eine gute elektrische Leitfähigkeit an, so dass ein wesentlicher Strom zwischen Anode und Kathode im Sinne eines Entladestroms fließen kann.

Diese Strombrücke kann somit die ungewollte Überladung des elektrochemischen Energiespeichers verhindern, indem sie einen direkten Ladungsaustausch zwischen Anode und Kathode ermöglicht.

An dieser Stelle sei auch darauf hingewiesen, dass der Begriff der Anode bzw. Kathode sich vorliegend auf einen Entladezustand bezieht. Hierbei ist die Anode die negative Elektrode, wohingegen die Kathode die positive Elektrode darstellt. Somit kann beim Entladen die Kathode auch als Pluspol und die Anode auch als Minuspol des elektrochemischen Energiespeichers verstanden werden. Beim Laden des elektrochemischen Energiespeichers vertauschen sich naturgemäß die Bezeichnungen (Anode bzw. Kathode) der jeweiligen Elektroden.

Erfindungsgemäß wird mit der spannungsabhängigen Zwischenschicht also ein funktionelles Bauteil in den elektrochemischen Energiespeicher integriert, der ein übermäßiges Beaufschlagen eines bereits vollständig geladenen elektrochemischen Energiespeichers verhindert. Ist nämlich die Zwischenschicht derart eingestellt, dass bei Erreichen der vollständigen Ladespannung auch gleichzeitig die Durchbruchschwellenspannung des Zwischenmaterials erreicht ist, fließt der Ladestrom im Wesentlichen über die spannungsabhängige Zwischenschicht, wodurch einer weiteren Aufladung des Energiespeichers entgegengewirkt wird. Der elektrochemisch aktive Innenraum des Energiespeichers wird also maximal mit der Durchbruchschwellenspannung der spannungsabhängigen Zwischenschicht beaufschlagt. Bei Aufladen eines Strangs von in Serie geschalteten einzelnen elektrochemischen Energiespeichern können somit die einzelnen Energiespeicher jeweils bis zur maximalen Ladespannung geladen werden (und auch bei dieser maximalen Ladespannung geladen werden), ohne einer unkontrollierten weiteren Überladung ausgesetzt zu sein. Die einzelnen Energiespeicher in dem Speichermodul können somit zeitlich versetzt jeweils den vollen Ladezustand erreichen, ohne dass bereits geladene Zellen einer ladungstechnischen Schädigung ausgesetzt werden würden.

Während des Ladens einzelner elektrochemischer Energiespeicher in einem Strang von in Reihe geschalteten Energiespeichern erfolgt also eine stetige Angleichung des Ladezustands der einzelnen Energiespeicher während des Ladens des Gesamtsystems. Aufgrund der Vermeidung von ladungsbedingten Schädigungen der Zellen kann so die Lebensdauer der einzelnen Energiespeicher und damit des gesamten Strangs verlängert werden. Aufgrund der bautechnischen Integration des spannungsabhängigen Zwischenmaterials in den elektrochemischen Energiespeicher ist ein Vorsehen von externen Regelkreisen bzw. externen Sicherungsstrukturen nicht erforderlich.

Durch eine Einstellung der Schichtdicke der spannungsabhängigen Zwischenschicht kann die Zwischenschicht geeignet auf einzelne Ladespannungen eingestellt werden. Da die Durchbruchschwellenspannung der spannungsabhängigen Zwischenschicht typischerweise mit der Dicke der Zwischenschicht variiert, kann so eine individuelle Anpassung der Zwischenschicht in Bezug auf einen vorbestimmten Spannungswert erfolgen.

Aufgrund der Integration der spannungsabhängigen Zwischenschicht in einen elektrochemischen Energiespeicher erweist sich der Überspannungsschutz auch als mechanisch widerstandsfähig und als für einen kostengünstigen Einsatz auch in Großserien geeignet.

Entsprechend einer ersten besonders bevorzugten Ausführungsform der Erfindung ist vorgesehen, dass der elektrochemische Energiespeicher eine vorbestimmte Schwellenspannung aufweist, welche bevorzugt die maximal zulässige Ladespannung des Energiespeichers ist, und die spannungsabhängige Zwischenschicht bei Erreichen dieser Schwellenspannung höchstens nur noch 10%, bevorzugt höchstens nur noch 1% ihres elektrischen Widerstandes bei 10% der Schwellenspannung aufweist. In anderen Worten wird die Zwischenschicht bei der Schwellenspannung (=Durchbruchschwellenspannung) ausreichend stark leitfähig, um eine Strombrücke zwischen Anode und Kathode auszubilden. Eine Einstellung der Schwellenspannung kann etwa durch eine geeignete Wahl der Schichtdicke der Zwischenschicht erfolgen, so dass je nach Schwellenspannung bzw. je nach Ladespannung eine geeignet dazu eingestellte Zwischenschichtdicke gewählt werden kann. Ganz besonders bevorzugt beträgt die Schwellenspannung zwischen 2,5V und 3,5V und liegt damit in dem Bereich der maximalen Ladespannungen einer Natrium-Nickel-Chlorid-Zelle. Die ausführungsgemäßen relativen Widerstandswerte erlauben zudem eine Ausbildung einer ausreichend gut leitfähigen Strombrücke, so dass ein Überladen des elektrochemischen Energiespeichers vermieden werden kann.

Gemäß einer weiteren besonders bevorzugten Ausführungsform der Erfindung ist vorgesehen, dass die spannungsabhängige Zwischenschicht eine bei der Schwellenspannung herrschende Durchbruchfeldstärke zwischen 1 und 15 V/mm, bevorzugt zwischen 2 und 10 V/mm aufweist. (Vorliegend soll als Durchbruchspannung (Durchbruchfeldstärke) diejenige Spannung (Feldstärke) verstanden, bei der ein Strom von 1 mA durch die Zwischenschicht fließt.) Derartige Durchbruchfeldstärken sind besonders geeignet für den Einsatz in Energiespeichern, die auf der Grundlage der Natrium-Nickel-Chlorid-Zellen bzw. Natrium-Schwefel-Zellen basieren.

Gemäß einer weiteren bevorzugten Ausführungsform des elektrochemischen Energiespeichers ist vorgesehen, dass die spannungsabhängige Zwischenschicht eine Dauerstromtragfähigkeit zwischen 5 und 30 Ampere/cm³, bevorzugt zwischen 15 und 20 Ampere/cm³ aufweist. Unter Dauerstromtragfähigkeit der spannungsabhängigen Zwischenschicht ist die maximale elektrische Volumenstromdichte zu verstehen, bei der die Temperatur der spannungsabhängigen Zwischenschicht innerhalb der bei bestimmungsgemäßen Betrieb zulässigen Temperaturgrenzen des Energiespeichers bei fortwährender Strombeaufschlagung verbleibt. Die betreffenden Werte eignen sich wiederum besonders für die Anwendung einer spannungsabhängigen Zwischenschicht in Verbindung mit Energiespeichern, die auf der Technologie der Natrium-Nickel-Chlorid-Zellen bzw. Natrium-Schwefel-Zellen basieren. Die Stromtragfähigkeit erlaubt die Ausbildung einer ausreichend großen Strombrücke zwischen Kathode und Anode bei gleichzeitigem Vorsehen von nur geringen Baugrößen der spannungsabhängigen Zwischenschicht. Aufgrund der Integration der spannungsabhängigen Zwischenschicht in den elektrochemischen Energiespeicher ist typischerweise eine nur geringe Bauteilgröße des Energiespeichers realisierbar.

Gemäß einer weiteren besonders bevorzugten Ausführungsform des elektrochemischen Energiespeichers ist vorgesehen, dass die spannungsabhängige Zwischenschicht eine maximale Dicke zwischen 100 und 2000 µm, bevorzugt zwischen 200 und 500 µm aufweist. Aufgrund der geringen Baugröße von manchen Energiespeichern, die etwa auf der Technologie der Natrium-Nickel-Chlorid-Zellen bzw. Natrium-Schwefel-Zellen basieren, ist die Ausbildung einer Zwischenschicht mit einer Dicke von 100 bis 2000 µm besonders geeignet, um diese in das äußere Gehäuse des elektrochemischen Energiespeichers zu integrieren. Erfolgt alternativ keine Integration in das Gehäuse, sondern etwa eine äußerliche Aufbringung können auch größere Abmessungen realisiert sein.

Entsprechend einer weiteren besonders bevorzugten Ausführungsform der Erfindung weist der elektrochemische Energiespeicher einen Kathodenabschnitt der Kathode auf, welcher insbesondere zylindrisch (bzw. ringförmig) von einem Anodenabschnitt der Anode umgeben ist, wobei zwischen dem Kathodenabschnitt und dem Anodenabschnitt eine spannungsabhängige Zwischenschicht angeordnet ist. Mit anderen Worten ist die spannungsabhängige Zwischenschicht in einem Spalt, insbesondere in einem Ringspalt zwischen Anode und Kathode angeordnet. Der Ringspalt kann auch nur abschnittsweise ringförmig ausgebildet sein. Da ein solcher Spalt zwischen Anode und Kathode bei elektrochemischen Energiespeichern mit einer Baugröße von nicht mehr als 50 cm typischerweise nur wenige Millimeter dick ist, können dort geeignet Zwischenschichten eingebracht werden, welche auch bei geringen Spannungen (≤ 3,5V) eine ausreichend hohe Durchbruchspannungsschwelle aufweisen. Die Integration der spannungsabhängigen Zwischenschicht in einen Spalt zwischen Anodenabschnitt und Kathodenabschnitt lässt wiederum einen kompakten und auch gegenüber äußeren mechanischen Einflüssen widerstandsfähigen elektrochemischen Energiespeicher resultieren.

Gemäß einer weiteren bevorzugten Ausführungsform der Erfindung ist vorgesehen, dass die Zwischenschicht gleichzeitig eine Gasabdichtung zwischen Anodenraum und Kathodenraum erreicht. Insofern kann die spannungsabhängige Zwischenschicht auch zwischen dem Anodenraum und Kathodenraum angeordnet sein, wobei die Zwischenschicht zu einer geeigneten Gasabdichtung zwischen den beiden andernfalls gegen Gasaustausch nicht entkoppelten Räumen beitragen kann. Folglich erfüllt die Zwischenschicht neben ihrer elektrischen Überladungsschutzfunktion auch noch eine weitere Funktion als Gassperre.

Entsprechend einer besonders bevorzugten Ausführungsform des erfindungsgemäßen elektrochemischen Energiespeichers ist der elektrochemische Energiespeicher als Natrium-Nickel-Chlorid-Zelle oder als Natrium-Schwefel-Zelle ausgebildet. Es ist bekannt, dass die übermäßige Beaufschlagung dieser Zellen mit Strom die Ausbildung von thermischen Hotspots im Bereich des Ionen leitenden Elektrolyten fördert, wodurch Mikrorisse, bzw. sogar mit dem Augen erkennbare Risse aufgrund der hohen thermischen Beanspruchung entstehen können. Das Vorsehen einer spannungsabhängigen Zwischenschicht kann somit signifikant zur Lebensdauerverlängerung dieser Energiespeicher beitragen.

Entsprechend einer weiteren bevorzugten Ausführungsform der Erfindung kann vorgesehen sein, dass die Betriebstemperatur des elektrochemischen Energiespeichers bei Entladung nicht weniger als 100 °C ist. Insbesondere ist die Betriebstemperatur bei Entladung nicht höher als 500 °C. Damit liegt die Betriebstemperatur in für eine Natrium-Nickel-Chlorid-Zelle sowie Natrium-Schwefel-Zelle typischen Betriebstemperaturbereichen. Wie vorab bereits ausgeführt, können im Betrieb bei einer übermäßigen Beaufschlagung des Energiespeichers mit Ladestrom thermische Spannungen in den elektrochemischen Energiespeichern entstehen, die zu einer vorzeitigen Alterung bzw. Zerstörung führen können.

Gemäß einer weiteren bevorzugten Ausführungsform des erfindungsgemäßen elektrochemischen Energiespeichers kann vorgesehen sein, dass die spannungsabhängige Zwischenschicht eines oder eine Mehrzahl der folgenden Materialien umfasst:
- SnO₂, welches vorzugsweise mit Nb, Co und/oder Sb dotiert ist;
- ZnO, welches vorzugsweise mit Ca, Mn, W, Cr und/oder Pr dotiert ist;
- Bi_{0,5}Na_{0,5}CU₃Ti₄O₁₂, welches vorzugsweise mit Ba dotiert ist;
- SrTiO₃, welches vorzugsweise mit Y dotiert ist;
- SiC.

Die vorstehende Auflistung stellt keine Einschränkung der Allgemeinheit der Erfindung dar; weitere Materialien oder Materialkombinationen sind denkbar.

Diese Zwischenschichtmaterialien (Varistormaterialien) sind besonders bevorzugt geeignet für den Überspannungsschutz bei Spannungen bis zu 5 V und eignen sich damit auch hervorragend für den Einsatz in Verbindung mit als Batteriespeicherzellen ausgebildeten Energiespeichern, vor allem in Verbindung mit Natrium-Nickel-Chlorid-Zellen und/oder Natrium-Schwefel-Zellen. Zudem weisen diese ausführungsgemäßen Materialien eine hohe Temperaturbeständigkeit auf, welche sie ebenfalls geeignet erscheinen lässt, in Verbindung mit dem Einsatz von Hochtemperatur-Energiespeichern wie Natrium-Nickel-Chlorid-Zellen bzw. Natrium-Schwefel-Zellen.

Gemäß einer weiteren bevorzugten Ausführungsform der Erfindung ist vorgesehen, dass die spannungsabhängige Zwischenschicht als vorgefertigter Baukörper in den elektrochemischen Energiespeicher integriert ist, insbesondere als vorgesinterter Baukörper. In anderen Worten liegt die spannungsabhängige Zwischenschicht bereits vor Verbindung der einzelnen Bauteile des Energiespeichers als vorgefertigter Baukörper vor, welcher bereits eine vorbestimmte Bauform aufweist. Diese kann im Rahmen der Integration teilweise noch geändert werden, etwa durch Pressdrücke, ändert aber die Grundform typischerweise nicht mehr wesentlich. So bleibt etwa ein Ringkörper auch nach Integration in den Energiespeicher weiterhin als Ringkörper erhalten.

Entsprechend einer alternativen Ausführungsform kann auch vorgesehen sein, dass die Zwischenschicht als beschichtetes Trägermaterial ausgebildet ist, wobei das Trägermaterial bevorzugt metallisch leitfähig ist, also bspw. aus Nickel oder einer Nickellegierung ausgebildet ist. Die Beschichtung selbst kann aus einem oder einer Mehrzahl der oben genannten Materialien ausgewählt werden.

Entsprechend einer weiteren bevorzugten Ausführungsform der Erfindung kann vorgesehen sein, dass die spannungsabhängige Zwischenschicht wenigstens teilweise als Beschichtung der Anode und/oder Kathode vorliegt. Insofern liegt die Zwischenschicht nicht als vorgeformter Baukörper vor, sondern er erhält seine Formgebung bereits durch die Anodenform und/oder die Kathodenform selbst, auf welche die Zwischenschicht aufgebracht ist. Eine weitere Anpassung der Form ist bei der Integration in den Energiespeicher bei dessen Zusammenbau nicht mehr erforderlich. Dennoch kann es sein, dass sich Bereiche der Zwischenschicht noch durch Krafteinwirkung während des Zusammenbaus teilweise ändern. Mögliche Beschichtungsverfahren zur Auftragung der Zwischenschicht können sein:
1. Sol-Gel-Abscheidungsverfahren;
2. Aerosol-Abscheidungsverfahren;
3. chemische Gasphasenabscheidung;
4. physikalische Gasphasenabscheidung;
5. elektrophoretisches Abscheidungsverfahren;
6. Dip-Coating;
7. Kombinationen der vorgenannten Verfahren.

Die vorstehende Auflistung stellt keine Einschränkung der Allgemeinheit der Erfindung dar; weitere Verfahren oder Verfahrenskombinationen sind denkbar.

Eine Beschichtung der Anode und/oder Kathode erfordert nicht die vollmaterialige Herstellung einer Zwischenschicht aus etwa einem der oben genannten Materialien, und erlaubt die Anwendung von materialschonenden Abscheidungsverfahren. Ebenso kann durch eine Beschichtung eine besonders dünne und widerstandsfähige Zwischenschicht erzeugt werden, welche vor allem bei sehr raumsparenden Konstruktionsformen eines elektrochemischen Energiespeichers vorteilhaft sind. Zudem erlaubt eine Abscheidung der Zwischenschicht die genaue Einstellung der Dicke der Zwischenschicht. Eine Genauigkeit von bis zu +/- 5 µm ist bei den meisten oben genannten Verfahren möglich.

Gemäß einer weiteren bevorzugten Ausführungsform des elektrochemischen Energiespeichers ist vorgesehen, dass die elektrische Kontaktierung zwischen Anode und der spannungsabhängigen Zwischenschicht und/oder der Kathode und der spannungsabhängigen Zwischenschicht wenigstens teilweise durch eine Leitschicht vermittelt ist. Die Leitschicht wird etwa bei dem Zusammenbau des Energiespeichers aus den Einzelbauteilen, bspw. als Leitpaste (etwa mit Graphit), aufgebracht. Alternativ können auch leitfähige Folienschichten aufgebracht werden. Die Leitschicht dient der Verbesserung der elektrischen Kontaktierung und damit der Verringerung des Flächenkontaktwiderstandes.

Gemäß einer weiteren bevorzugten Ausführungsform des elektrochemischen Energiespeichers ist vorgesehen, dass die spannungsabhängige Zwischenschicht auf ein Trägermaterial aufgebrachte ist. Durch die Aufbringung der spannungsabhängigen Zwischenschicht auf ein Trägermaterial kann das thermische Ausdehnungsverhalten des so erhaltenen Komposits auf umgebende Komponenten des elektrochemischen Energiespeichers abgestimmt werden. Weiterhin kann durch die Verwendung eines Trägermaterials, insbesondere eines metallisch leitfähigen Trägermaterials, auf eine vollmaterialige Ausführung des spannungsabhängig leitfähigen Baukörpers aus Varistorwerkstoffen verzichtet werden und somit die Kosten optimiert werden. Weiterhin kann durch die Aufbringung der spannungsabhängigen Zwischenschicht auf eine Trägerstruktur die Funktionalität der spannungsabhängigen Leitfähigkeit mit weiteren Funktionalitäten, beispielsweise der räumlichen Trennung von Kathoden- und Anodenraum, kombiniert werden. Als Trägermaterialien können sowohl metallische, insbesondere auf Basis von Ni, als auch nicht-metallische Werkstoffe, insbesondere auf Basis von Al₂O₃ und Na-β-Al₂O₃, sowie Kombinationen hiervon verwendet werden.

Gemäß einer ersten bevorzugten Ausführungsform des erfindungsgemäßen elektrischen Speichermoduls ist vorgesehen, dass das Speichermodul ein elektronisches Ladungsmanagementsystem umfasst, welches keine Schaltung aufweist, die für den Ausgleich eines ungleichen Ladungszustandes der wenigstens zwei in Serie geschalteten elektrochemischen Energiespeicher ausgebildet ist. Ein Ladungsmanagementsystem ist typischerweise als Batteriemanagementsystem ausgebildet, welches die Ladung bzw. Entladung der einzelnen Energiespeicher individuell regelt bzw. steuert. Durch den Verzicht auf eine Schaltung zum Ausgleich der ungleichen Ladezustände einzelner in Serie geschalteter elektrochemischer Energiespeicher kann ein besonders einfaches und damit verhältnismäßig wenig anfälliges Ladungsmanagementsystem verwirklicht werden.

Nachfolgend soll die Erfindung anhand einzelner Figuren im Detail näher erläutert werden. Hierbei weisen Bauteile mit gleichen Bezugszeichen gleiche technische Funktionen und Wirkungen auf.

Weiterhin sei darauf hingewiesen, dass die nachfolgenden Figuren lediglich schematisch zu verstehen sind, und damit keine Einschränkungen hinsichtlich der Ausführbarkeit erlauben.

Weiterhin sei darauf hingewiesen, dass die in den nachfolgenden Figuren dargestellten Einzelmerkmale für sich allein sowie in Kombination miteinander beansprucht werden, soweit die Kombination die der Erfindung zugrundeliegenden Aufgaben lösen kann.

Hierbei zeigen:
- Figur 1: eine erste Ausführungsform des erfindungsgemäßen elektrochemischen Energiespeichers 1 in schematischer seitlicher Schnittansicht;
- Figur 2: eine weitere Ausführungsform des erfindungsgemäßen elektrochemischen Energiespeichers 1 in seitlicher Schnittansicht;
- Figur 3: eine schematische Darstellung einer Ausführungsform eines elektrochemischen Speichermoduls 40 in seitlicher Schnittansicht;
- Figur 4: eine diagrammatische Darstellung des Spannungs-/Stromverhaltens zweier Varistormaterialien (ZnO, SiC), die als Zwischenschicht eingesetzt werden könnten.

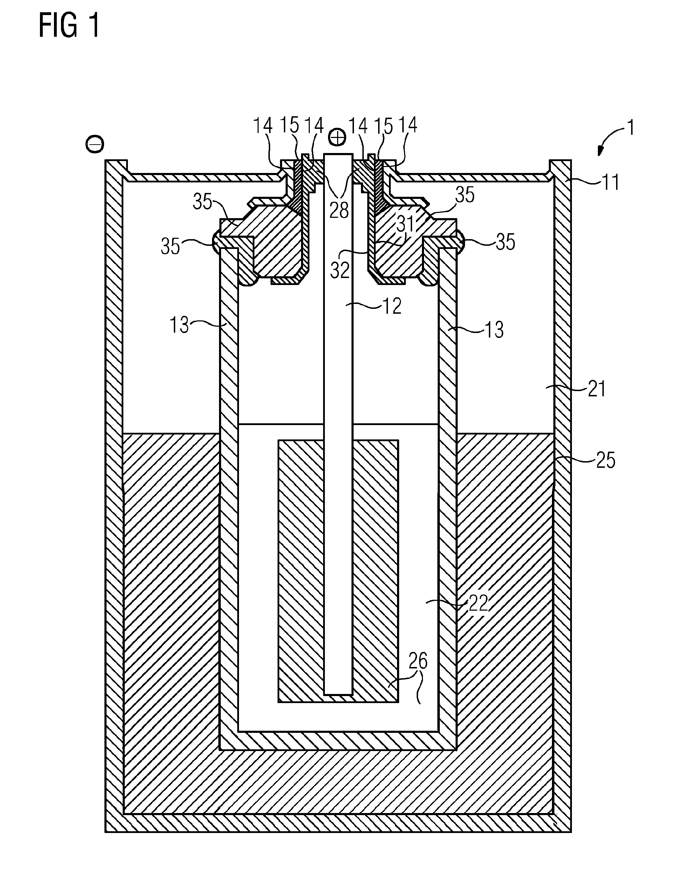

Figur 1 zeigt eine erste Ausführungsform des erfindungsgemäßen elektrochemischen Energiespeichers 1 in einer seitlichen Schnittansicht. Der elektrochemische Energiespeicher 1 weist eine Anode 11 sowie Kathode 12 auf, die durch eine spannungsabhängige Zwischenschicht 15 voneinander getrennt sind. Die Anode 11 ist mit einem Anodenraum 21 elektrisch verbunden, in welchem Anodenmaterial 25 angeordnet ist. Die Kathode 12 ist mit einem Kathodenraum 22 elektrisch verbunden, in welchem Kathodenmaterial 26 angeordnet ist. Ist der vorliegende elektrochemische Energiespeicher 1 bspw. basierend auf der Technologie der Natrium-Nickel-Chlorid-Zellen aufgebaut, ist das Anodenmaterial 25 bei Betriebstemperatur (ca. 250°C) flüssiges Natrium, wohingegen das im Kathodenraum 22 angeordnete Kathodenmaterial 26 eine elektrolytische Mischung von Nickel, Nickelchlorid, Kochsalz sowie möglichen weiteren Zusätzen darstellt, die einen Schmelzelektrolyten ausbilden. Bei Betriebstemperatur des elektrochemischen Energiespeichers liegt auch das Kathodenmaterial 26 wenigstens teilweise in flüssiger Form vor.

Anodenraum 21 und Kathodenraum 22 sind weiter über einen Ionen leitenden Separator 13 voneinander getrennt. Der Ionen leitende Separator 13 gewährleistet einen Ionenaustausch zwischen Anodenraum 21 und Kathodenraum 22, wobei gleichzeitig ein elektronischer Austausch von Ladungsträgern unterbunden wird. Dieser erfolgt lediglich über eine mit der Anode 11 bzw. Kathode 12 elektrisch kontaktierte Leitung (vorliegend nicht gezeigt). Demgemäß baut sich zwischen Anode 11 und Kathode 12 eine Spannungsdifferenz (Potenzialdifferenz) auf, welche je nach Ladungszustand des elektrochemischen Energiespeichers 1 vom Betrag her kleiner oder größer ist.

Erreicht der elektrochemische Energiespeicher 1 eine vorbestimmte Spannungsdifferenz, bspw. den vollständigen Ladezustand bei entsprechender Ladespannung, ist das im Kathodenraum 22 befindliche Kathodenmaterial 26 bspw. im Wesentlichen vollständig umgesetzt. Eine weitere Beaufschlagung des elektrochemischen Energiespeichers 1 mit Ladespannung kann folglich entweder nicht umgesetzt werden, oder aber zu weiteren nicht gewünschten Veränderungen des Energiespeichers 1 führen. Dadurch ist die Beschädigung bzw. Zerstörung des Energiespeichers 1 möglich. Insofern ist es erforderlich, bei Erreichen des vollständigen Ladezustands den elektrochemischen Energiespeicher nicht mit weiterer Ladespannung zu beaufschlagen.

Ist der elektrochemische Energiespeicher 1 hingegeben bspw. vollständig entladen, ist das im Anodenraum 21 befindliche Anodenmaterial 25 im Wesentlichen vollständig aufgebraucht, so dass der elektrochemische Energiespeicher keine bzw. eine nur sehr geringe Spannungsdifferenz zwischen Anode 11 und Kathode 12 aufweist.

Je nach Ladezustand variieren also die Füllstände von Anodenmaterial 25 im Anodenraum 21 bzw. Kathodenmaterial 26 im Kathodenraum 22, wobei eine Umsetzung des Anodenmaterials 25 eine entsprechende Erzeugung von Kathodenmaterial 26 zur Folge hat und umgekehrt. Die Füllstände von Anodenmaterial 25 und Kathodenmaterial 26 korrelieren somit gegengleich entsprechend der stöchiometrisch umgesetzten Mengen. Umso höher der Füllstand von Anodenmaterial 25, umso größer ist jedoch die Spannungsdifferenz zwischen Anode 11 und Kathode 12.

Sind nun mehrere elektrochemische Energiespeicher 1 in einem elektrochemischen Speichermodul 40 in serieller Schaltung miteinander elektrisch verbunden, liegt eine Streuung der einzelnen Ladezustände einzelner Energiespeicher 1 bzw. deren Kapazitäten vor. Um dennoch ein derartiges elektrochemisches Speichermodul 40 elektrisch voll aufladen zu können, ohne jedoch gleichzeitig die Überladung einzelner elektrochemischer Energiespeicher 1 befürchten zu müssen, sieht erfindungsgemäß der elektrochemische Energiespeicher 1 die spannungsabhängige Zwischenschicht 15 zwischen Anode 11 und Kathode 12 vor. Die Anode 11 ist hierbei mit der Zwischenschicht 15 über einen Anodenabschnitt 31 elektrisch kontaktiert. Der elektrische Kontakt wird zudem über eine Leitschicht 14 vermittelt, welche zwischen Anode 11 und spannungsabhängiger Zwischenschicht 15 angeordnet ist und der Leitfähigkeitsverbesserung dient. Ebenso ist die spannungsabhängige Zwischenschicht 15 mit der Kathode 12 im Bereich eines Kathodenabschnitts 32 kontaktiert, wobei ebenfalls Kathode 12 und spannungsabhängige Zwischenschicht 15 mit einer Leitschicht 14 zur verbesserten elektrischen Kontaktierung versehen sind. Die Kathode 12 erstreckt sich zudem vorliegend auf einen Kathodendeckel 28, mittels welchem sie in elektrischem Kontakt ist. Der Kathodendeckel 28 kann somit als Teil der Kathode 12 betrachtet werden.

Die elektrische Zwischenschicht 15 grenzt weiterhin endständig an ein Abdichtmaterial 35, welches eine gasdichte Verbindung zwischen dem Ionen leitenden Separator 13 sowie der Anode 11 und Kathode 12 bewirkt. Das Abdichtmaterial 35 kann bspw. als Glaslot ausgebildet sein. Das Abdichtmaterial 35 verhindert somit den Gasaustausch zwischen Anodenraum 21 und Kathodenraum 22.

Ist der elektrochemische Energiespeicher 1 nun vollständig aufgeladen, liegt zwischen Anode 11 und Kathode 12 die bestimmungsgemäß maximal mögliche Potenzialdifferenz an. Die spannungsabhängige Zwischenschicht 15 wird aufgrund der Kontaktierung mit Anode 11 und Kathode 12 ebenfalls dieser Spannungsdifferenz ausgesetzt. Da das Leitungsverhalten bzw. der Widerstandswert der Zwischenschicht 13 jedoch spannungsabhängig ist, ändert sich im Laufe des zunehmenden Ladezustandes auch die Leitfähigkeit der Zwischenschicht 15, bis die Ladespannung LV der Schwellenspannung SV (Durchbruchschwellenspannung) entspricht. Bei Erreichen dieses Spannungswertes kommt es zum Stromdurchbruch und damit zur Ausbildung einer gut leitenden Strombrücke zwischen Anode 11 und Kathode 12. Die Zwischenschicht 15 dient somit bei Erreichen der Schwellenspannung SV als Überladungsschutz.

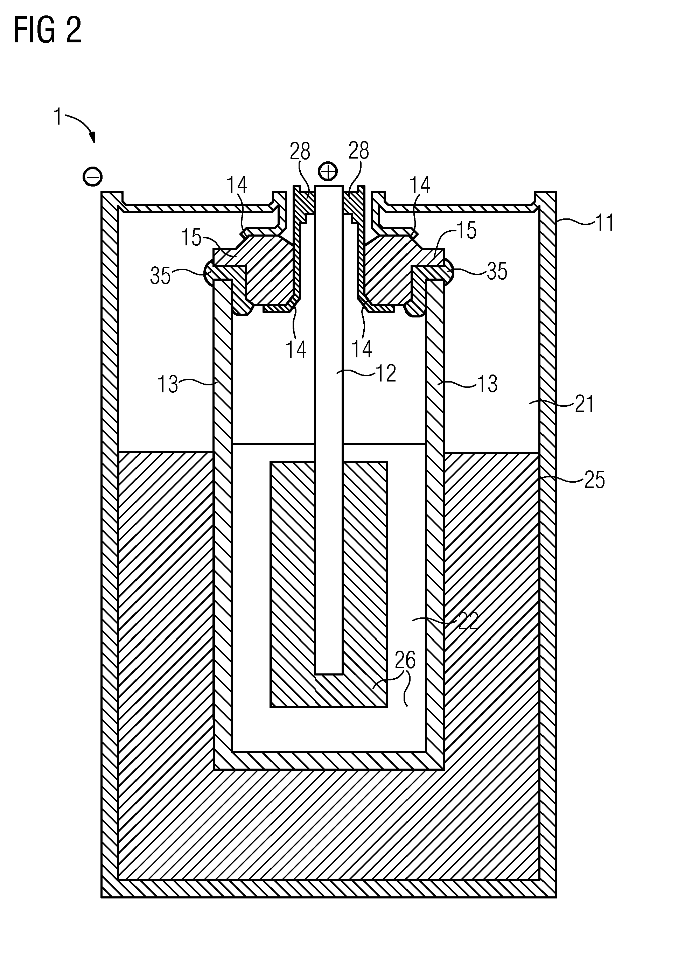

Figur 2 zeigt eine weitere Ausführungsform des erfindungsgemäßen elektrochemischen Energiespeichers 1, in seitlicher Schnittansicht. Die dargestellte Ausführungsform unterscheidet sich von der in Figur 1 dargestellten Ausführungsform lediglich dahingehend, dass ein Teil des Abdichtmaterials 35 nun durch eine Zwischenschicht 15 ersetzt ist. Demgemäß befindet sich die Zwischenschicht 15 nicht bzw. nicht mehr ausschließlich in einem Spalt zwischen Anodenabschnitt 31 und Kathodenabschnitt 32 sondern füllt auch noch Bereiche des Anodenraums 21 und Kathodenraum 22 aus. Gleichzeitig bewirkt die Zwischenschicht 15 eine Gasabdichtung zwischen Anodenraum 21 und Kathodenraum 22. Vermittelt über Abdichtmaterial 35 stellt die Zwischenschicht 15 also sowohl einen Kontakt zwischen Anode 11 und Kathode 12 (bzw. Kathodendeckel 28) dar, übernimmt aber auch die Funktion eines gasdichten Materialabschlusses zwischen Kathodenraum 22 und Anodenraum 21.

Aufgrund der unterschiedlichen Formgebung und Dicke der Zwischenschicht 15 im Vergleich zu der in Figur 1 gezeigten Zwischenschicht 15 kann die in Figur 2 gezeigte Zwischenschicht 15 eine Anpassung der Schwellenspannung SV an die Ladespannung LV ermöglichen. Insbesondere kann in Figur 2 die Zwischenschicht 15 auch auf einem nicht weiter bezeichneten und gezeigten Trägermaterial aufgebracht sein.

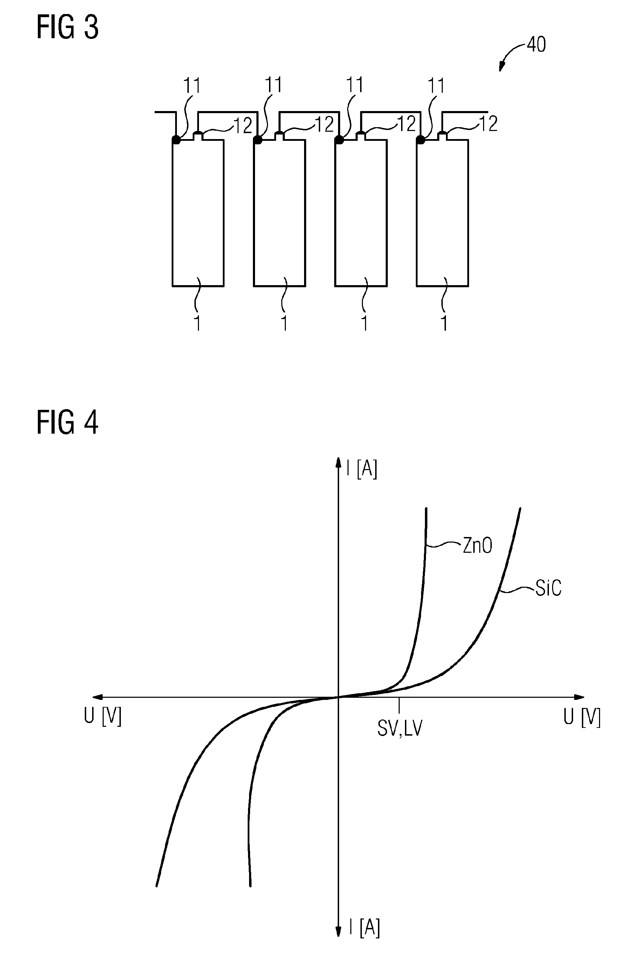

Figur 3 zeigt ein elektrochemisches Speichermodul 40 in seitlicher Schnittansicht, welches eine Mehrzahl an elektrochemischen Energiespeichern 1 in elektrisch serieller Verschaltung miteinander aufweist. Das elektrochemische Speichermodul 40 ist insbesondere als Strang von vier in Reihe geschalteten elektrochemischen Energiespeichern 1 ausgebildet, deren Kathoden 12 jeweils mit den Anoden 11 eines benachbarten Energiespeichers 1 elektrisch verschaltet sind.

Figur 4 zeigt eine graphische Darstellung der spannungsabhängigen Stromkennkurve zweier unterschiedlicher Varistormaterialien, die von einer Zwischenschicht 15 einer Ausführungsform des erfindungsgemäßen Energiespeichers 1 umfasst sein können. Die Kennkurve zeigt bei beiden Materialien eine im Wesentlichen sprunghafte Stromleitung bei Erreichen einer vorgegebenen, materialspezifischen Schwellenspannung SV (Durchbruchschwellenspannung). Das Stromleitungsverhalten beider Materialien ist weiterhin unabhängig von der Polarität der anliegenden Spannung, wird also im Wesentlichen durch den Betrag der Spannungsdifferenz bestimmt.

Bei dem Varistormaterial ZnO lässt sich bereits bei geringeren Spannungsbetragswerten das sprunghafte Stromleitungsverhalten erkennen. Das Varistormaterial SiC zeigt hingegen ein Stromleitungsverhalten, welches erst bei höheren Spannungsbeträgen sprunghaft ansteigt. Beide Materialien entsprechen sich hierbei hinsichtlich ihrer Geometrie und anderen physikalischen Versuchsparametern.

Ist nun die Zwischenschicht 15 wie sie etwa in den Ausführungsformen des elektrochemischen Energiespeichers 1 nach Figur 1 bzw. Figur 2 vorgesehen ist, derart ausgebildet, dass die Schwellenspannung SV der Zwischenschicht 15 mit der Ladespannung LV des elektrochemischen Energiespeichers 1 übereinstimmt, kommt es bei den betreffenden Spannungen zu einem sprunghaften Stromleitungsanstieg. Die Zwischenschicht 15 wirkt also verstärkt stromleitend und bildet damit eine Strombrücke aus zwischen Anode 11 und Kathode 12, die als Überladungsschutz dient.

Weitere Ausführungsformen ergeben sich aus den Unteransprüchen.

## Patentansprüche

1. Elektrochemischer Energiespeicher (1) mit einer Anode (11), die mit einem Anodenraum (21) elektrisch verbunden ist, und einer Kathode (12), die mit einem Kathodenraum (22) elektrisch verbunden ist, und einen Ionen leitenden Separator (13), welcher den Anodenraum (21) von dem Kathodenraum (22) elektrisch isolierend trennt,
**dadurch gekennzeichnet, dass** zwischen Anode (11) und Kathode (12) eine spannungsabhängige Zwischenschicht (15) angeordnet ist, die mit der Anode (11) und der Kathode (12) direkt oder auch indirekt elektrisch kontaktiert ist, und deren elektrischer Widerstand sich entsprechend einer veränderten elektrischen Spannungsdifferenz zwischen Anode (11) und Kathode (12) derart ändert, dass ein elektrischer Strom über die Zwischenschicht (15) zwischen Anode (11) und Kathode (12) fließen kann.

2. Elektrochemischer Energiespeicher gemäß Anspruch 1,
**dadurch gekennzeichnet, dass** der elektrochemische Energiespeicher (1) eine vorbestimmte Schwellenspannung (SV) aufweist, welche bevorzugt die maximal zulässige Ladespannung (LV) des Energiespeichers (1) ist, und die spannungsabhängige Zwischenschicht (15) bei Erreichen dieser Schwellenspannung (SV) höchstens nur noch 10 %, bevorzugt höchstens nur noch 1 % ihres elektrischen Widerstands bei 10 % der Schwellenspannung (SV) aufweist.

3. Elektrochemischer Energiespeicher gemäß einem der vorhergehenden Ansprüchen,
**dadurch gekennzeichnet, dass** die spannungsabhängige Zwischenschicht (15) eine bei der Schwellenspannung herrschende Durchbruchfeldstärke zwischen 1 und 15 V/mm, bevorzugt zwischen 2 und 10 V/mm aufweist.

4. Elektrochemischer Energiespeicher gemäß einem der vorhergehenden Ansprüchen,
**dadurch gekennzeichnet, dass** die spannungsabhängige Zwischenschicht (15) eine Dauerstromtragfähigkeit zwischen 5 und 30 A/cm³, bevorzugt zwischen 15 und 20 A/cm³ aufweist.

5. Elektrochemischer Energiespeicher gemäß einem der vorhergehenden Ansprüchen,
**dadurch gekennzeichnet, dass** die spannungsabhängige Zwischenschicht (15) eine maximale Dicke zwischen 100 und 2000 µm, bevorzugt zwischen 200 und 500 µm aufweist.

6. Elektrochemischer Energiespeicher gemäß einem der vorhergehenden Ansprüchen,
**dadurch gekennzeichnet, dass** der elektrochemische Energiespeicher (1) einen Kathodenabschnitt (32) der Kathode (12) aufweist, welcher insbesondere zylindrisch bzw. ringförmig von einem Anodenabschnitt (31) der Anode (11) umgeben ist, wobei zwischen dem Kathodenabschnitt (32) und dem Anodenabschnitt (31) eine spannungsabhängige Zwischenschicht (15) angeordnet ist.

7. Elektrochemischer Energiespeicher gemäß einem der vorhergehenden Ansprüchen,
**dadurch gekennzeichnet, dass** die Zwischenschicht (15) gleichzeitig eine Gasabdichtung zwischen Anodenraum (21) und Kathodenraum (22) erreicht.

8. Elektrochemischer Energiespeicher gemäß einem der vorhergehenden Ansprüchen,
**dadurch gekennzeichnet, dass** der elektrochemische Energiespeicher (1) als Natrium-Nickel-Chlorid-Zelle oder als Natrium-Schwefel-Zelle ausgebildet ist.

9. Elektrochemischer Energiespeicher gemäß einem der vorhergehenden Ansprüchen,
**dadurch gekennzeichnet, dass** die Betriebstemperatur des elektrochemischen Energiespeichers (1) bei Entladung nicht weniger als 100 °C ist.

10. Elektrochemischer Energiespeicher gemäß einem der vorhergehenden Ansprüchen,
**dadurch gekennzeichnet, dass** die spannungsabhängige Zwischenschicht (15) eines oder eine Mehrzahl der folgenden Materialien umfasst:
- SnO₂, welches vorzugsweise mit Nb, Co und/oder Sb dotiert ist;
- ZnO, welches vorzugsweise mit Ca, Mn, W, Cr und/oder Pr dotiert ist;
- Bi_{0,5}Na_{0,5}Cu₃Ti₄O₁₂, welches vorzugsweise mit Ba dotiert ist;
- SrTiO₃, welches vorzugsweise mit Y dotiert ist;
- SiC.

11. Elektrochemischer Energiespeicher gemäß einem der vorhergehenden Ansprüchen,
**dadurch gekennzeichnet, dass** die spannungsabhängige Zwischenschicht (15) als vorgefertigter Baukörper in den elektrochemischen Energiespeicher (1) integriert ist, insbesondere als vorgesinterter Baukörper.

12. Elektrochemischer Energiespeicher gemäß einem der vorhergehenden Ansprüchen,
**dadurch gekennzeichnet, dass** die spannungsabhängige Zwischenschicht (15) wenigstens teilweise als Beschichtung der Anode (11) und/oder Kathode (12) vorliegt.

13. Elektrochemischer Energiespeicher gemäß einem der vorhergehenden Ansprüchen,
**dadurch gekennzeichnet, dass** die elektrische Kontaktierung zwischen Anode (11) und der spannungsabhängigen Zwischenschicht (15) und/oder der Kathode (12) und der spannungsabhängigen Zwischenschicht (15) wenigstens teilweise durch eine Leitschicht (14) vermittelt ist.

14. Elektrochemischer Energiespeicher gemäß einem der vorhergehenden Ansprüchen,
**dadurch gekennzeichnet, dass** die spannungsabhängige Zwischenschicht (15) auf ein Trägermaterial aufgebracht ist.

15. Elektrochemisches Speichermodul (40), welches wenigstens zwei elektrochemische Energiespeicher (1) gemäß einem der vorhergehenden Ansprüche aufweist, die miteinander elektrisch seriell verschaltet sind.
